# EUROPEAN PATENT SPECIFICATION

(11) **EP 4 202 363 B1**
(45) Date of publication and mention of the grant of the patent: **08.10.2025**
(21) Application number: 22211651.9
(22) Date of filing: 06.12.2022
(51) Int. Cl.: G01C 21/00, G08G 1/01, G06N 20/00

(54) **METHOD AND APPARATUS FOR GENERATING SPEED PROFILE DATA GIVEN A ROAD ATTRIBUTE USING MACHINE LEARNING**
VERFAHREN UND VORRICHTUNG ZUR ERZEUGUNG VON GESCHWINDIGKEITSPROFILDATEN MIT EINEM STRASSENATTRIBUT UNTER VERWENDUNG VON MASCHINELLEM LERNEN
PROCÉDÉ ET APPAREIL POUR GÉNÉRER DES DONNÉES DE PROFIL DE VITESSE EN FONCTION D'UN ATTRIBUT DE ROUTE À L'AIDE D'UN APPRENTISSAGE AUTOMATIQUE

(30) Priority: 17.12.2021 US 202117554909
(43) Date of publication of application: 28.06.2023
(73) Proprietor: HERE Global B.V., 5611 ZT Eindhoven (NL)
(72) Inventor: Shnaider, Yelena, Amstelveen (NL)
(74) Representative: Potter Clarkson

(56) References cited:
- US-A1- 2018 174 447
- US-A1- 2020 286 372

## Description

### BACKGROUND

Mapping and navigation service providers face significant technical challenges with respect to accurately estimating the speed profiles of vehicles traveling along a navigation route. This is because a navigation route through a real-world environment typically encounters various road attributes (e.g., traffic lights, roundabouts, stop signs, yield signs, lane counts, road widths, etc.) that can differentially affect vehicle speed on the route and be difficult to predict.

US 2018/174447 A1 is concerned with traffic speed estimation and, in particular, establishing different traffic speeds for differing paths through an intersection. US 2020/286372 A1 is concerned with determining lane level speed profiles and, in particular, using historical vehicle speed data to establish speed profiles on a lane level of granularity for road segments and for a series of road segments.

### SOME EXAMPLE EMBODIMENTS

Therefore, there is a need for generating speed profile data (e.g., for road segments on a navigation route) given a road attribute present on the navigation route using a machine learning approach.

The invention is directed to a method according to claim 1, an apparatus according to claim 14 and a computer program according to claim 15. Further details are included in the dependent claims.

Still other aspects, features, and advantages of the invention are readily apparent from the following detailed description, simply by illustrating a number of particular embodiments and implementations, including the best mode contemplated for carrying out the invention. Accordingly, the drawings and description are to be regarded as illustrative in nature, and not as restrictive.

### BRIEF DESCRIPTION OF THE DRAWINGS

The embodiments of the invention are illustrated by way of example, and not by way of limitation, in the figures of the accompanying drawings:
FIG. 1 is a diagram of a system capable generating speed profile data given a road attribute using machine learning, according to one embodiment;
FIG. 2 is a diagram illustrating an example of a time-space diagram constructed from learned speed profile data, according to one embodiment;
FIG. 3 is a diagram of components of a machine learning system capable of generating speed profile data given a road attribute, according to one embodiment;
FIG. 4 is a flowchart of a process for generating speed profile data given a road attribute using machine learning, according to one embodiment;
FIG. 5 is a diagram illustrating an example user interface for requesting a route speed profile, according to one embodiment;
FIG. 6 is a diagram of a geographic database, according to one embodiment;
FIG. 7 is a diagram of hardware that can be used to implement an embodiment of the processes described herein;
FIG. 8 is a diagram of a chip set that can be used to implement an embodiment of the processes described herein; and
FIG. 9 is a diagram of a terminal that can be used to implement an embodiment of the processes described herein.

### DESCRIPTION OF SOME EMBODIMENTS

Examples of a method, apparatus, and computer program for generating speed profile data given a road attribute using machine learning are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

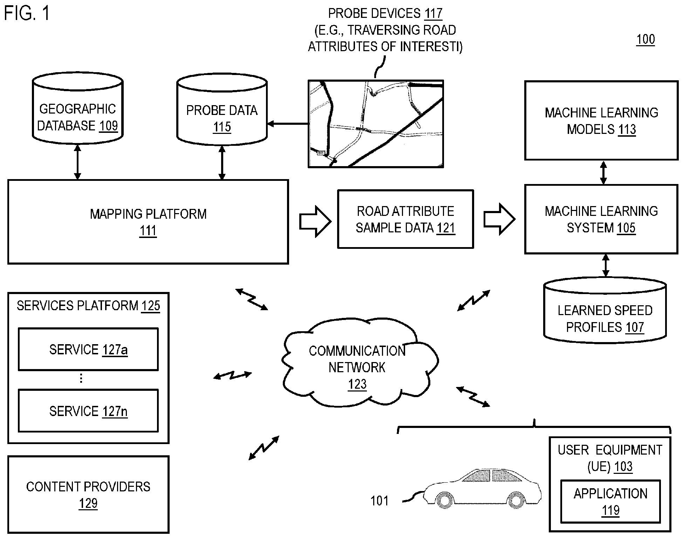

FIG. 1 is a diagram of a system capable generating speed profile data given a road attribute using machine learning, according to one embodiment. The various embodiments described herein relate to speed profile creation/estimation/prediction. As used herein, a speed profile refers, for instance, to vehicle travel speed versus time at a given location and/or vehicle travel speed versus distance from the given location (e.g., for vehicles 101 and/or mobile user equipment (UE) devices 103 traveling in a road network). For mapping and navigation service providers, speed profiles are produced for real-world environments to provide various location-based services and function including but not limited to recommending navigation routes, predicting traffic, calculating estimated times of arrivals, and/or the like. However, service providers face significant technical challenges with respect to taking into account road attributes and/or features that may affect vehicle travel speed. In other words, it is contemplated that a road attribute can be any type of feature on or within proximity of a road that can affect traffic flow. Examples of different types of road attributes include but are not limited to traffic lights, traffic signs, roundabouts, intersections, etc. Other examples can include but are not limited to locations in the road network where there are curves, changes in elevation, changes in the number of lanes, junctions, etc.

In particular, one technical challenge relates to the ability to generate a realistic speed profile (e.g., speed versus time or speed versus distance from a given location) for any arbitrary navigation route. The technical challenge arises in part because each different navigation route will naturally contain different types of road attributes (e.g., traffic lights, traffic signs, roundabouts, etc.) that can increase or decrease vehicle speed along the route. Thus, accurately predicting or otherwise the extent to which reach road attribute type is expected to affect vehicle speed under different road conditions (e.g., type of day, day of week, season, etc.) and/or vehicle type (e.g., commercial versus non-commercial vehicles) can be technically difficult. Vehicle type, for instance, can potentially lead to significantly different vehicle behavior when vehicles encounter different types of road attributes. For example, large commercial vehicles (e.g., cargo vehicles such as trucks) behave differently at intersections, lights, ramps, etc. when compared to passenger cars because large commercial vehicles generally need to brake earlier, traverse the intersection (or other road attribute) at a lower speed, or eventually wait for more than one lane to be free before turning. These differences in vehicle behavior across different vehicle types are technically difficult to differentiate using traditional probe data alone.

To address these technical challenges, a system 100 of FIG. 1 introduces a capability to apply a machine-learning approach (e.g., via a machine learning system 105) to generating speed profiles (e.g., learned speed profiles 107) using existing digital maps of road attributes and/or equivalent features (e.g., as stored in a geographic database 109 of a mapping platform 111). In one embodiment, the machine learning system 105 can train machine learning models 113 by collecting probe data 115 (e.g., data indicating vehicle location and speed as vehicles - i.e., probe devices 117 - traverse various road attributes) that has been labeled according to vehicle type. In this way, the machine learning system 105 can predict the learned speed profiles 107 for different types of vehicles. For example, the system 100 can label the probe data 115 as either commercial or non-commercial vehicles, and then predict learned-speed profiles separately for commercial versus non-commercial vehicles. It is noted that the vehicle type examples of commercial and non-commercial vehicles are provided by way of illustration and not as limitations. A commercial vehicle, for instance, can refer to large or heavy vehicles (e.g., any vehicle larger or heavier than a sports utility vehicle (SUV) such as but not limited to light trucks, heavy trucks, trailers, road trains, buses, and/or the like. It is contemplated that any vehicle type classification can be used according to the embodiments described herein including but not limited to sub-classes of different vehicle types (e.g., different types of commercial vehicles such as the commercial vehicle examples listed above).

In one embodiment, the system 100 can use the learned speed profiles 107 to configure vehicles to operate more efficiently over a given navigation route. For example, large commercial vehicles (e.g., cargo trucks) can have adaptive powertrains that can response to different driving requirements associated with encountering different road attributes enroute. In other words, the way that these vehicles behave at intersections and other maneuvering-requiring road portions (e.g., at road attributes) can have an effect on the powertrain or other system of the vehicle. For example, the vehicle's powertrain (e.g., an electric powertrain, hydrogen-based powertrain, etc.) can be configured for lower or higher output requirements, have extra energy stored on battery, etc. based on the learned speed profiles 107 at different road attributes for different vehicle types.

Under free flow traffic and normal weather conditions, it is generally assumed that road attributes have the most significant effect on speed increase/decrease on a navigation route. Hence, the various embodiments of the machine-learning approach to determining learned speed profiles 107 described herein can provide for a more realistic representation of vehicle speed on a route across different vehicle types than conventional means such as but not limited to averaging historically observed vehicle speed data.

In one embodiment, the system 100 can use supervised and/or unsupervised machine-learning algorithms (e.g., for creating machine learning models 113) including but not limited to: K-nearest neighbors (KNN), K means clustering, polynomial regression, and/or equivalent. By way of example, the KNN algorithm is a lazy learning algorithm because it does not have a specialized training phase and uses all of the data for training while classification and makes no assumption about the underlying data. KNN, for instance, uses feature similarity to predict the values of new data points based on how closely it matches the data points in a labeled/annotated dataset. K means clusters data into K number of clusters based on matching data points to the nearest mean of one of the K clusters. It is noted that these machine learning algorithms are provided by way of illustration and not as limitations. It is contemplated any other equivalent algorithm or process may be used according to the embodiments described herein.

The machine-learning algorithms can be applied to probe data 115 collected from probe devices 117 (e.g., vehicles 101 and/or mobile UEs 103 respectively executing applications 119 for collecting and/or reporting probe data 115) that are or have traverse road attributes of interesting in a real-world environment. Probe data 115, for instance, are location data points (e.g., Global Positioning System (GPS) data points or equivalent) collected using one or more location sensors of the probe devices 117 with attributes such as but not limited to: location coordinates (e.g., latitude, longitude), timestamp indicating the time the location data point was determined, speed of the probe device 117, and/or an identifier (e.g., session identifier, probe identifier, etc.). The machine-learning algorithms can also be applied to road attribute sample data 121 comprising samples of instances of road attribute types (e.g., indicated by location coordinates - latitude, longitude) and the areas/distances proximate to the features (e.g., determined from digital map data of the geographic database 109). Although the various embodiments described herein are discussed with respect to specific example road attributes (e.g., traffic lights, roundabouts, stop signs, yield signs, lane count, road width, lane width, etc.), it is contemplated that the various embodiments can be used with any type of road attribute that can increase or decrease vehicle speed traversing the road attribute.

In one embodiment, the system 100 uses machine learning algorithms (e.g., via the machine learning system 105 and machine learning models 113) to output the final speed profiles (e.g., the learned speed profiles 107) for vehicles traversing different road attribute types. More specifically, traffic analytics tools and/or speed information application programming interfaces (APIs) (e.g., provided by the mapping platform 111) can be used to find the average free flow speed of traffic per road segments of interest (e.g., road segments in a navigation route of interest). Next, to be able to generate the increase and decrease in speed around road attributes, the machine learning system 105 is used to identify the different speed profiles (e.g., learned speed profiles 107) before and after a certain type of road attribute. By applying this process to multiple combinations of road attributes, a pool of learned speed profiles 107 corresponding to before and after each road attribute type, becomes available.

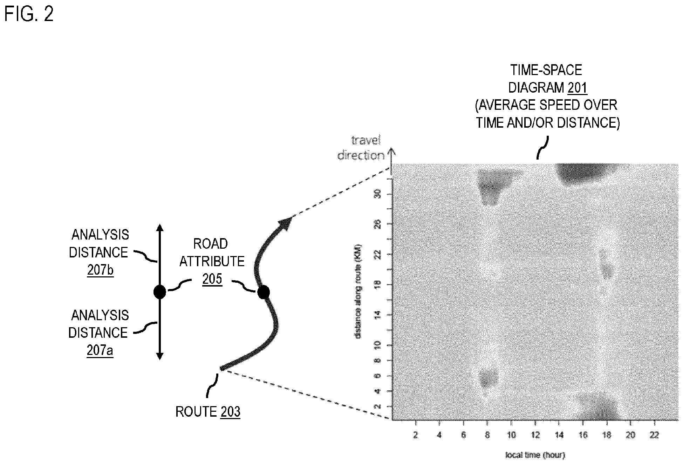

FIG. 2 is a diagram illustrating an example of a time-space diagram 201 constructed from learned speed profiles 107, according to one embodiment. The time-space diagram 201 shows the traffic conditions (e.g., vehicle speed) at different locations of a route 203 over time (e.g., along the x-axis) and distance along the route (e.g., along the y-axis). Note that the y-axis in the time-space diagram 201 is a linear order of road segments of the route 203 and the x-axis is local time in hours. In this example, the route 203 includes a road attribute 205 (e.g., a traffic sign) on the route 203. With respect to the direction of travel of the route 203, the system 100 determines an analysis distance 207a before the location of the road attribute 205 and an analysis distance 207b after the location of the road attribute 205. Probe data 115 is collected or otherwise retrieved from probe devices 117 traversing the road attribute 205 with the analysis distances 207a and 207b. The features of the corresponding probe data 115, road attribute 205, and/or analysis distances 207a and 207b are processed using the machine learning system 105 according to the various embodiments described herein to determine the learned speed profiles 107 for the road segments of the route within the analysis distances 207a and 207b, and across different time windows. The learned speed profiles 107 are then visualized in the time-space diagram 201.

In addition or alternatively, in one embodiment, the learned speed profiles 107 can be used to support advanced driver assistance system (ADAS) or other autonomous functions on vehicles. As discussed above, these ADAS/autonomous functions include but are not limited to powertrain management, braking management, energy production/regeneration management, and/or the like. For example, as a vehicle approaches an intersection (or other similar road attribute) where the vehicle will have to slow and then speed up again, the learned speed profiles 107 can be used to more accurately determine at the road segments where regenerative braking will be needed and/or road segments where additional power or energy storage will be needed to support acceleration.

In one embodiment, the learned speed profiles 107 are determined for just the road segments falling within the analysis distance before and after the location of the road attribute. As a result, the learned speed profiles 107 may not cover an entire navigation route of interest when the route extends beyond the analysis distance before and/or after the location of the road attribute. To be able to generate a full speed profile of a random route, in one embodiment, the following information is concatenated:
- The learned speed profiles 107 for the route's road segments that are before and after road attributes within their respective analysis distances; and
- The free flow speed or speed limit (e.g., queried or otherwise retrieved from the geographic database 109 or equivalent) for the route's road segments that do not fall within the analysis distance of any road attributes on the route for which the learned speed profiles 107 are available.

So given an arbitrary route, the various embodiments of the system 100 described herein have the capability to generate a speed profile for the entire route which will be stitched together with learned speed profiles 107, speed limits (legal speed constraint) and/or traffic free flow speed (e.g., from traffic analytic tools and speed information API outputs of the mapping platform 111 or equivalent).

In one embodiment, the learned speed profiles 107 can be provided as an output to any service, application, and/or component with connectivity to the system 100 over a communication network 123. Examples of these services, applications, and/or components include location-based or other services provided by a services platform 125, one or more services 127a-125n (also referred to as services 127) of the services platform 125, one or more content providers 129, and/or the like.

The various embodiments described herein provide technical improvements over conventional approaches by being more accurate and less prone to sensitivity to extreme values, over smoothing, and missing out on the capability to identify different types of speed profiles even for the same road attribute. In this approach, the system 100 is not averaging speeds at bulk (e.g., as conventionally done). Instead, according to one embodiment, the system 100 is clustering the different speed patterns within an analysis distance of a road attribute and finding the best polynomial fit which represents the cluster's speed. In one embodiment, the system 100 also provides a machine learning model 113 to predict whether a vehicle 101 will increase, decrease, or keep steady speed when approaching a road attribute, based on its speed and/or related features.

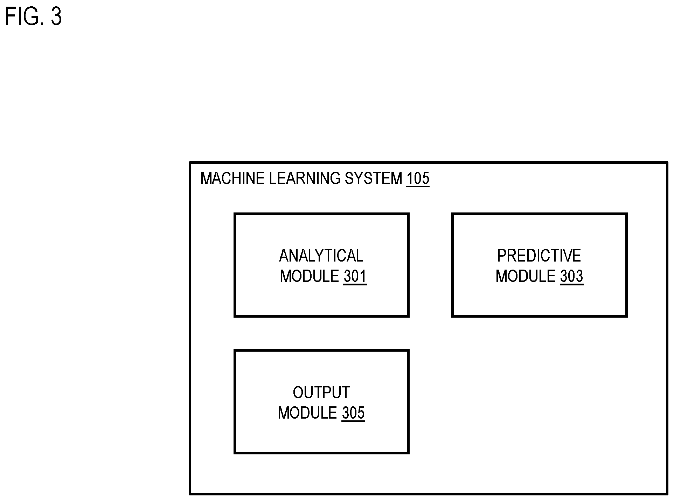

FIG. 3 is a diagram of components of a machine learning system 105 capable of generating speed profile data given a road attribute, according to one embodiment. In one embodiment, as shown in FIG. 3, the machine learning system 105 of the system 100 includes one or more components for generating learned speed profiles 107 for a given road attribute according to the various embodiments described herein. It is contemplated that the functions of the components of the machine learning system 105 may be combined or performed by other components of equivalent functionality. As shown, in one embodiment, the machine learning system 105 includes an analytical module 301, a predictive module 303, and an output module 305. The above presented modules and components of the machine learning system 105 can be implemented in hardware, firmware, software, or a combination thereof. Though depicted as a separate entity in FIG. 1, it is contemplated that the machine learning system 105 may be implemented as a module of any of the components of the system 100 (e.g., a component of the mapping platform 111, services platform 125, services 127, content providers 129, probe devices 117, vehicles 101, UEs 103, applications 119, and/or the like). In another embodiment, one or more of the modules 301-305 may be implemented as a cloud-based service, local service, native application, or combination thereof. The functions of the machine learning system 105 and modules 301-305 are discussed with respect to figures below.

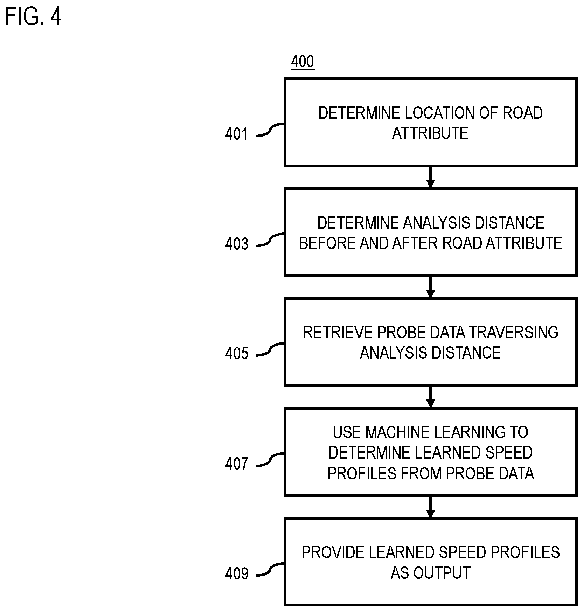

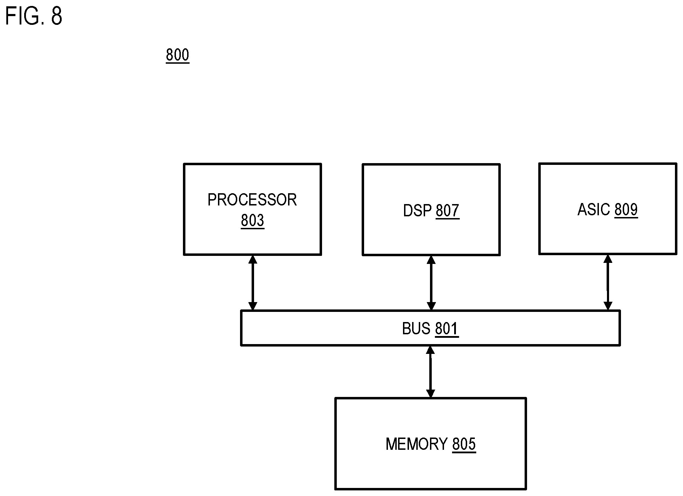

FIG. 4 is a flowchart of a process for generating speed profile data given a road attribute using machine learning, according to one embodiment. In various embodiments, the machine learning system 105 and/or any of the modules 301-305 may perform one or more portions of the process 400 and may be implemented in, for instance, a chip set including a processor and a memory as shown in FIG. 8. As such, the machine learning system 105 and/or any of the modules 301-305 can provide means for accomplishing various parts of the process 400, as well as means for accomplishing embodiments of other processes described herein in conjunction with other components of the system 100. Although the process 400 is illustrated and described as a sequence of steps, it is contemplated that various embodiments of the process 400 may be performed in any order or combination and need not include all of the illustrated steps.

In step 401, the analytical module 301 determines a location of a road attribute in a road network. As described previously, a road attribute can be any map or cartographic feature that can potentially increase or decrease vehicle speed for vehicles traversing the attribute. In one embodiment, a set of road attributes of interest can be specified or otherwise defined by the system 100. For example, a set of road attributes to analyze or detect by the machine learning system 105 can include but is not limited to traffic lights, roundabouts, stop sings, yield signs, and/or the like.

Once a set of one or more road attributes is selected, the analytical module 301 can create a sample of each road attribute type (e.g., road attribute sample data 121). In one embodiment, each sample can include a target number (e.g., 100 or any other designated number) of road attribute instances. The sample can be created, for instance, by querying the geographic database 109 or equivalent map database for the target number of instance of the road attribute of interest. For example, if the road attribute of interest is a roundabout, then the analytical module 301 can query the geographic database 109 for the location of 100 instances of traffic lights occurring in a given geographic area. The analytical module 301 can then use the queried location coordinates (e.g., latitude, longitude) to denote each instance's location (e.g., sample X amount of roundabouts and make sure there's a location coordinate (e.g., latitude, longitude) data attribute to each instance of sampled roundabout).

In one embodiment, the analytical module 301 can optionally specify additional criteria for selecting the target number of instances of each road attribute of interest. For example, the analytical module 301 can search for instances that do not occur within a proximity threshold of other road attributes to avoid potentially confounding vehicle speed increases or decreases attributable to two or more proximate road attributes. In other examples, the analytical module 301 can use criteria to filter instances based on other contextual attributes such as but not limited to functional class of associated road segments, speed limits of associated road segments, and/or the like.

In step 403, the analytical module 301 determines an analysis distance before and after the location of the road attribute in the road network (e.g., location of each instance of the road attribute in the road attribute sample data 121 collected according to the various embodiments of step 401). As used herein, the term "analysis distance" refers to the physical distance before and after the location of a road attribute from which probe data 115 is sampled to generate the learned speed profiles 106. In one embodiment, the analytical module 301 defines the "analysis distance" before and after each road attribute, as a function of speed limit or average free flow speed of traffic within a proximity threshold of the road attribute (or determined instance of the road attributed).

The analysis distance is determined based on the vehicle's type and/or characteristics. The vehicle type or characteristics, for instance, can be determined from annotations in the probe data 115 begin evaluated. For example, the probe data provider can include annotations of the vehicle type or characteristic. In other cases, even when the probe data 115 is not labeled or annotated, the probe data provider may specify the types of vehicles or fleets from which the data was collected (e.g., by specifying that the fleet includes only truck, vans, and/or other types of commercial vehicles in the case of commercial vehicle types). In addition or alternatively, the probe data 115 can be processed and grouped by different observed driving behavior profiles or features such as but not limited to primary speed, reaction distance, speed decrease/increase profile, etc. These driving behavior profiles determined from the probe data 115 can then be used to classify the associated vehicles by different vehicle types and/or characteristics. The vehicle type classification can include general vehicle types (e.g., commercial versus non-commercial vehicles) or more detailed classifications of vehicle types (e.g., light trucks, heavy trucks, vans, trailers, road trains, buses, etc.) within the general categories. In other embodiment, the classification can be based on individual characteristics of the vehicles such as but not limited to weight, length, speed, number of axles, and/or the like.

The vehicle type and/or characteristics classification can be indicative of a vehicle's stopping distance. The analysis distance is determined from this stopping distance. The analysis distance is larger than the vehicle's stopping distance and is affected by a vehicle's type or characteristics such as but not limited to the vehicle's total weight, vehicle length, vehicle speed, number of axles, and/or the like. For example, the analytical module 301 can differentiate between commercial vehicles (e.g., cargo trucks, work trucks, etc.) and non-commercial vehicles (e.g., passenger vehicles) because they can differ significantly in weight, size, handling characteristics which, in turn, can affect the analysis distance and/or stopping distance. In this way, learned speed profiles 107 can be determined separately for different vehicle types (e.g., commercial vehicle classes versus non-commercial vehicles) and/or different vehicle characteristics (e.g., weight, length, speed, number of axles, applicable speed limits, etc.).

It is noted that this stratification of learned speed profiles 107 by vehicle type and/or characteristics is provided by way of illustration and not as a limitation. It is contemplated that any other type of vehicle characteristic or attribute (e.g., cars versus truck, motorcycles versus cars, weight, length, etc.) can be selected for creating differentiated learned speed profiles 107 according to the embodiments described herein. Accordingly, the machine learning models 113 can be trained using training data annotated with any vehicle type and/or characteristic of interest at any granularity of interest. The resulting learned speed profiles 107 can then also be predicted for the vehicle types and/or characteristics of interest including finer classifications (e.g., the types and characteristics listed in the examples above or equivalent) than commercial versus non-commercial vehicles.

In one embodiment, some road attributes (e.g., traffic lights) can have multiple states (e.g., traffic light states such as "red to green", "green", "red", and "green to red") in comparison to other road attributes (e.g., traffic signs) which do not have multiple states. In embodiments where are road attributes with multiple states or where the system 100 wants to have a more precise classification, the analytical module 301 can set the "analysis distance" to be a shorter distance (e.g., to be just a little larger than the "stopping distance" such as but not limited to 5%-10% larger). The reason is that the stopping distance can a combination of one or more of the : perception distance (e.g., how far away a driver will be able to perceive the road attribute), reaction distance (e.g., over what distance the driver can react to the road attribute after perceiving it), and braking distance (e.g., over what distance the vehicle is take to slow or come to a stop after the driver decides to act by slowing down or stopping).

Under a non-multi-state road attribute scenario, the analytical module 301 can set the analysis distance to be considerably larger than the stopping distance (e.g., greater than 10%). However, when running the KNN classification for a multiple state road attribute (e.g., a traffic light), the classification may not be optimal with larger analysis distances because the probe data points of different classes (e.g., all four classes of the traffic light states described in the example above) will be overlapping in the beginning of the analysis distance and will be better defined (e.g., isolated, grouped) as they get closer to the actual stopping distance. Accordingly, in one embodiment, the analytical module 301 can have different analysis distances for multiple-state road attributes (e.g., traffic lights) versus non-multiple-state attributes (e.g., roundabouts, stop signs, yield signs, lane count, road width, lane width, etc.) for the speed profile analysis.

In one embodiment, the analysis distance is set to be larger than the stopping distance so that the analytical module 301 we can better choose the appropriate speed profile to a certain simulated speed of a vehicle (e.g., a truck) reaching the analysis distance. The simulated vehicle (e.g., truck) will have a certain speed when it approaches the analysis distance, the analytical module 301 can the pick the learned speed profile 107 from among all learned speed profiles 107 based on the selected learned speed profile 107 being closest to the approach speed.

Table 1 below provides an example a vehicle's (e.g., a truck's) approach speed and corresponding stopping distance (and by extension, the analysis distance that is a function of the stopping distance). It is noted that the values in Table 1 are provided by way of illustration and not as limitations. The actual approach speeds or speed limits and resulting stopping/analysis distances depend on the road attributes in a real-world environment.

**Table 1**

| **Truck speed limit (kilometers per hour (kmh))** | **Stopping distance (meters) (Analysis distance)** |
|---|---|
| 60 - 70 | 150 |
| 80 - 90 | 200 |
| 100 | 250 |

After setting the analysis distance for the road attribute instances in the road attribute sample data 121, the analytical module 301 can sample probe data 115 (e.g., GPS probe data) inside the defined analysis distance before and after the location (e.g., latitude, longitude) of each road attribute instance for each road attribute type. In one embodiment, because the speed limit and/or traffic free flow speed associated with each instance can be different, each instance can correspondingly have different analysis distances. In summary, in step 405, the analytical module 301 retrieves probe data 115 collected using one or more location sensors of one or more vehicles 101 (or probe devices 117 or UEs 103) traversing the analysis distance before and after the location of the road attribute (or road attribute instance) in the road network.

In one embodiment, the analytical module 301 can perform additional pre-processing of the sampled probe data 115. For example, the analytical module 301 can run any map matching algorithm or process known in the art on the sampled probe data 115 to remove outliers, probe errors, and/or duplicates. Outliers and/or probe errors can be identified for instance if a probe data point cannot be map matched or is not within a threshold distance of neighboring points in the same session or trajectory. Duplicates can be identified if two or more points are map matched to within a threshold distance of the same road segment.

Another example pre-processing step is to convert the location coordinates (e.g., latitude, longitude) attribute of each session's probes in the sampled probe data 115 to relative location before or after the road attribute of interest (e.g., in meters or equivalent). The conversion can be performed by simplifying determine the distance and direction between the coordinates of the road attribute and the coordinates of the probe, or by any other equivalent means. Yet another example pre-processing step is to remove any probes that are speed outliers. In other words, probes that have speeds that are statistically significantly different from other probes in the same session can be removed as an outlier. It is contemplated that the analytical module 301 can use any outlier test or removal procedure known in the art.

In step 407, the predictive module 303 processes the probe data using a machine learning model to determine one or more machine-learned speed profiles of one or more road segments of the road network within the analysis distance. In one embodiment, the machine-learning processing process can be separated into: (1) a supervised learning approach for use, for instance, for road attributes with multiple states (e.g., traffic lights); and (2) an unsupervised learning approach for use, for instance, for road attributes without multiple states (e.g., roundabouts, stop signs, yield signs, lane count, road width, lane width, etc.).

For the supervised machine learning embodiment, the predictive module 303 annotates data points of the sampled probe data 115 (e.g., collected according to the embodiments described above) with classes based on the possible states of the road attribute. Examples of the classes a traffic light road attribute include but is not limited to: "red to green", "green", "red", and "green to red".

The predictive module 303 then finds speed profiles for the classes associated with deceleration where vehicles are slowing down or coming to a stop. With respect to the traffic light states, these deceleration classes include probes or data points associated with the "red" class (e.g., where the traffic light is red indicating the vehicles should stop) and the "green to red" class (e.g., where the traffic light is changing from green to red such as changing to yellow before red indicating vehicles should slow to a stop). In the deceleration classes (e.g., the "red" and "green to red" classes), the predictive module 303 can use K means clustering or equivalent to identify different speed clusters. For each cluster in the two deceleration classes, the predictive module 303 runs polynomial regression or equivalent identify the best fit for the group (e.g., to characterize the speed profiles or behaviors for the deceleration classes).

The predictive module 303 can perform a similar process to find speed profiles for the classes associated with acceleration where vehicles are speeding up or otherwise not slowing down. With respect to the traffic light states, these acceleration classes include probes or data points associated with the "green" class (e.g., where the traffic light is green indicating the vehicles can continue without stopping) and the "red to green" class (e.g., where the traffic light is changing from red to green indicating vehicles continue from a stop). In the acceleration classes (e.g., the "green" and "red to green" classes), the predictive module 303 can use K means clustering or equivalent to identify different speed clusters. For each cluster in the two acceleration classes, the predictive module 303 runs polynomial regression or equivalent identify the best fit for the group (e.g., to characterize the speed profiles or behaviors for the deceleration classes).

Next, the predictive module 303 can create a machine learning model 113 to classify vehicles (e.g., based on input probe data 115) into one of classes associated with a multiple-state road attribute (e.g., the four classes of traffic light states described in the example above). The predictive module 303 runs KNN or equivalent on the labeled/annotated dataset (e.g., generated according to embodiments described above) to have a machine learning model 113 classifying data into the four classes (e.g., "red to green", "green", "red", and "green to red").

In one embodiment, the machine learning model 113 further processes the probe data to determine a stopping time period associated with the road attribute based on a time that the one or more vehicles is traveling below a threshold speed value. More specifically, the predictive module 303 can find the average time period of stopping per each instance of the road attribute (e.g., traffic light) by:
- Labeling the sessions/traces/vehicles in the sampled probe data 115 which made a stop at the road attribute;
- Filter out (1) vehicles in the deaccelerating class ("red" and "green to red"), (2) vehicles with decreasing speed along the analysis distance; and (3) vehicles having a lower speed than a "stopping speed", while being inside the analysis distance ahead of the road attribute; and label the filtered vehicles as "stopped";
- Per each session/trace/vehicle in the sampled probe data 115 which is labeled as "stopped", finding the amount of time its speed was below the stopping speed (e.g., as defined above) while the vehicles location was before the road attribute - now each "stopped" vehicle has a "stopping time period"; and
- Averaging the stopping time period for all vehicles/sessions/traces in the sampled probe data 115 as aggregated over road attribute type and storing the determined average stopping time period as the average time period of stopping per road attribute type.

It is noted that the stopping period need not be 0 kmh. The predictive module 303 can consider a stopping speed to be any speed under a threshold speed value. In one embodiment, the threshold speed value can be based on the general sensor error of the sensor used to collect the probe data 115. For example, commercial vehicles such as but not limited to trucks can have a sensor error of speed equal to +-2 kmh, then all traces in the probe data 115 with speed <= 2 kmh will be considered to have a stopping speed.

In one embodiment, the machine learning model further processes the probe data to determine a probability of stopping associated with the road attribute based on one or more instances of the one or more vehicles traveling below a threshold speed value for more than a threshold period of time. The probability of stopping can be determined as the percentage of stopping vehicles in the sampled probe data 115, or by any other equivalent process.

Step 407 now returns to embodiments of the unsupervised machine learning approach for road attributes with multiple-states or for when multiple-states of a road attribute need not be considered. Under the unsupervised approach, the predictive module 303 can process the sampled probe data 115 using K means clustering or equivalent to identify the different speed clusters. For each cluster, the predictive module 303 runs polynomial regression or equivalent identify the best fit for the group (e.g., to characterize the speed profiles or behaviors for the deceleration classes - i.e., the learned speed profiles 107).

In one embodiment, the unsupervised approach can also determine the average time period of stopping per each instance of the road attributes as described above with respect to the various embodiments of the supervised approach. In addition, the predictive module 303 can also find the probability of stopping per each instance of the road attributes as described with respect to the various embodiments of the supervised approach above.

In one embodiment of either the supervised or unsupervised approach, the predictive module 303 can run the process for every speed limit value or traffic free flow speed value associated with the road attribute instances in the road attribute sample data 121 (e.g., available on commercial vehicle roads and/or non-commercial vehicle roads). The reason is that to begin with, the machine learning system 105 filters the road attributes instances by these values before machine learning processing. This means, the machine learning system 105 will end up with learned speed profiles 107 around road attributes, per specific speed limits or free flow traffic speed (e.g., associated with road segments nearest or within a proximity threshold of the road attribute). Because of this, the machine-learned speed profiles 107 will be different for every speed limit value (or traffic free flow speed), even for the same sample of road attribute type.

Table 2 below summarizes the sampling, pre-processing, processing, and output steps of the process 400 for generating learned speed profiles 107 according to the various embodiments described herein for example road attributes (e.g., traffic lights, roundabouts, stop signs, yield signs, lane count, road width, lane width, etc.) for embodiments of both the supervised and unsupervised approaches.

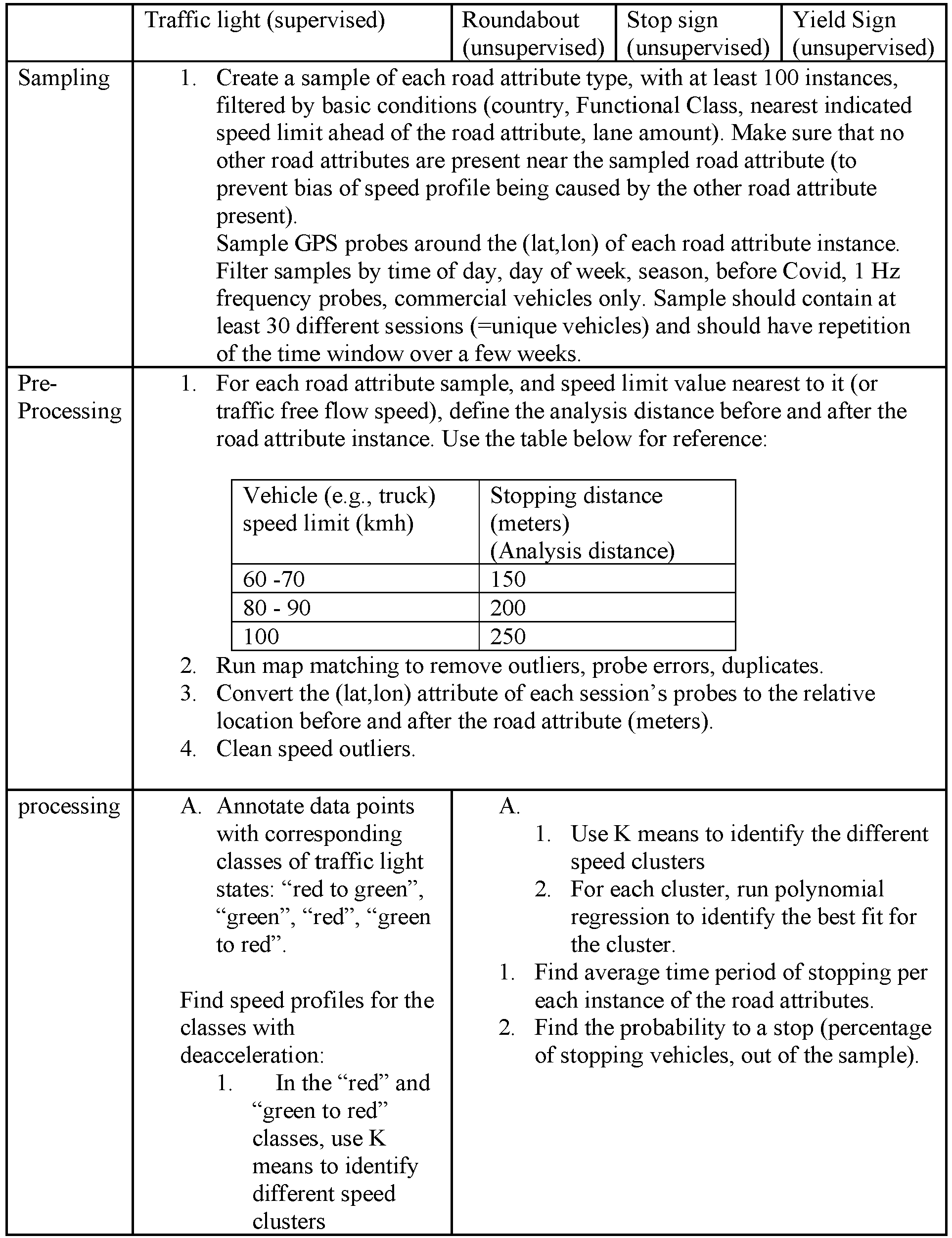

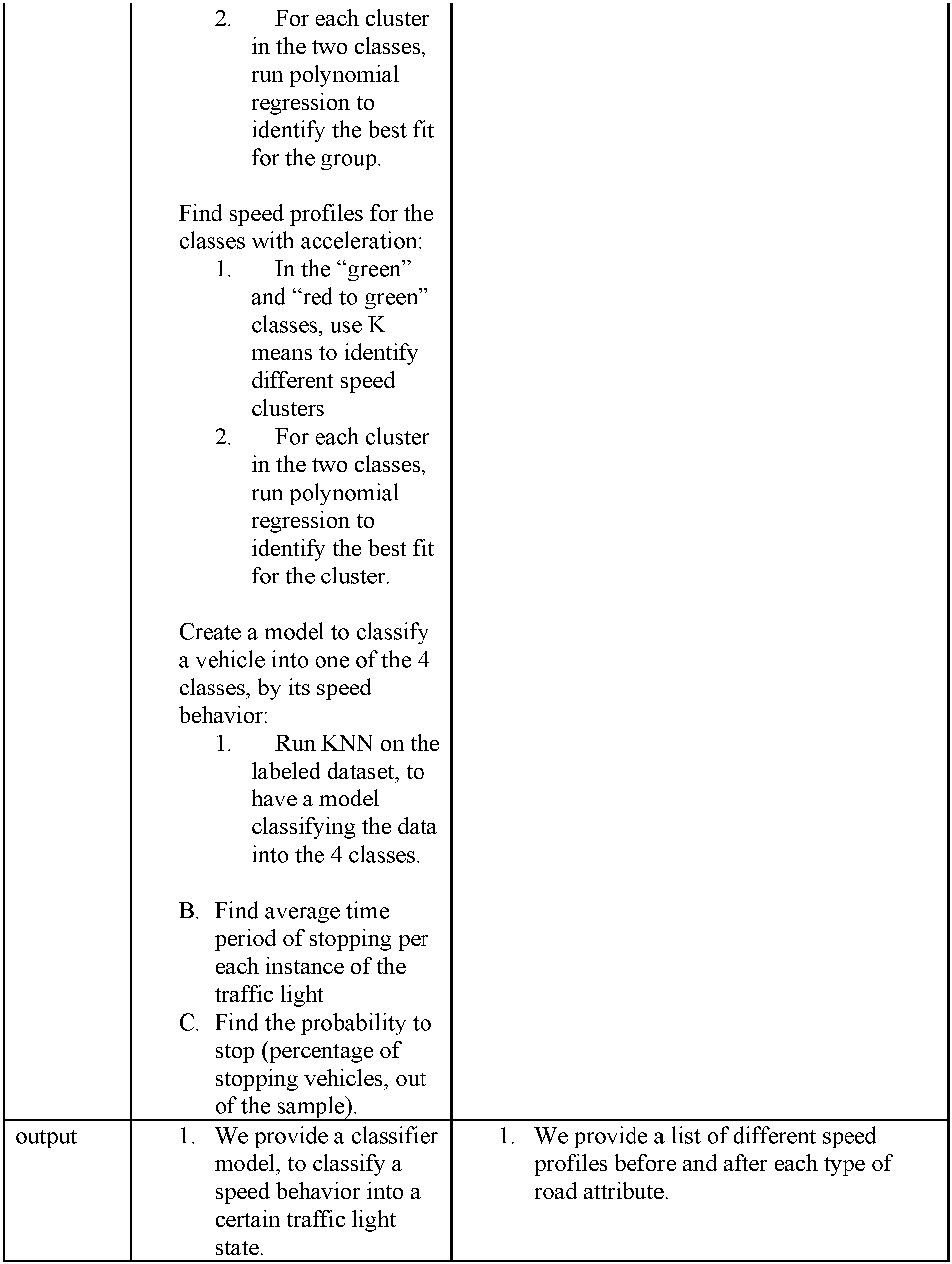

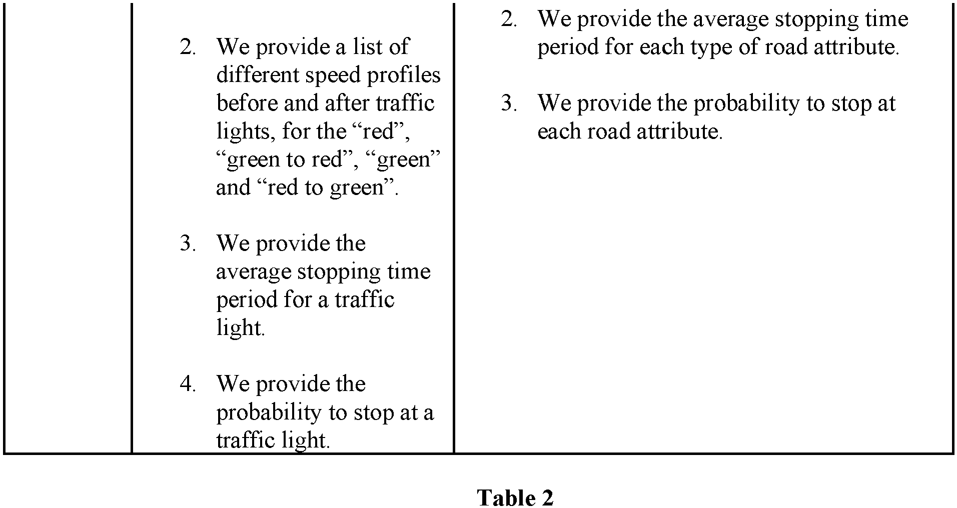

In step 409, the output module 305 provides the one or more machine-learned speed profiles or trained machine learning models 113 as an output. More specifically, in one embodiment, the output module 305 can provide one or more of the following as outputs:
- A classifier model 113 to classify the speed behavior of a simulated vehicle (e.g., commercial or non-commercial vehicle), when approaching a road attribute (e.g., a traffic light). In order not to grant access to the model training and object, the output model 113 can be created as a service to return the predicted class (e.g., "red", "green", "red to green", "green to red") given a simulated vehicle's (e.g., a truck's) speed at the analysis distance, and knowing the speed limit and/or other features/attributes (e.g., the functional class of the road segment associated with the road attribute, the country, the amount of lanes, etc.).
- A list of learned speed profiles 107 before and after road attributes of interest (e.g., which is a result of a polynomial fitting of the data according to the various embodiments described herein). In one embodiment, this dataset is the final output, no code or raw data are included in the output.
- Average stopping time and probability of a stop when approaching the road attribute.
- A service to return a simulated speed, per a request of an arbitrary route.

With respect to the output of the simulated speed or learned speed profiles 107 of a requested above, the mapping platform 111 receives a request specifying or otherwise indicating a navigation route. The mapping platform 111 can then interact with the machine learning system 105 to determine a route speed profile for the navigation route based, at least in part, on the one or more machine-learned speed profiles 107 associated with the road attribute based on identifying the road attribute in one or more route road segments of the navigation route. In one embodiment, the navigation route includes the road attribute and one or more other road attribute types, and wherein the route speed profile is further based on one or more other machine-learned speed profiles associated with the one or more other road attribute types.

In one embodiment, for road segments of the requested navigation route that is not within the analysis distances of the any road attributes in the route, the mapping platform 111 can concatenate historical travel speeds and/or speed limits that have been previously recorded in the geographic database 109 or equivalent datastore. In other words, the mapping platform 111 can simulate the speed profile for an entire navigation route (e.g., all road segments of a navigation route) by concatenating prior speed data (e.g., via historical traffic analytic tools, speed APIs, or equivalent) for road segments without an attribute with the learned speed profiles 107 generated for road segments associated with road attributes according to the embodiments described herein.

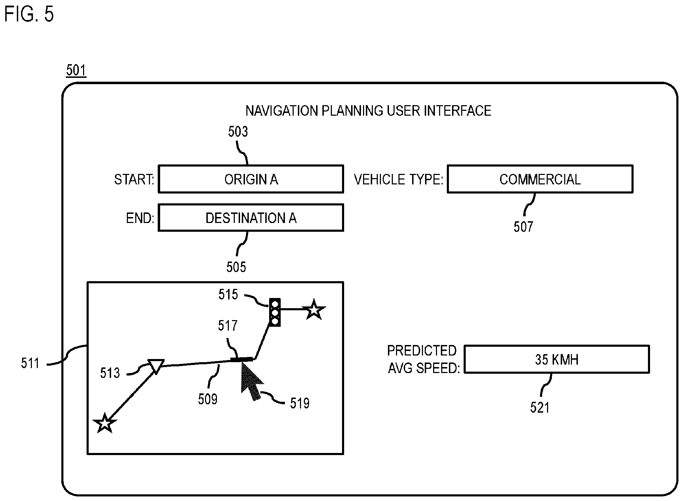

FIG. 5 is a diagram illustrating an example user interface 501 for requesting a route speed profile, according to one embodiment. As shown, the user interface 501 includes user interface elements 503 and 505 for inputting a start (e.g., "Origin A") and end (e.g., "Destination A") of a planned navigation route, and also a user interface element 507 for inputting the type of vehicle that will be traveling the route (e.g., "Commercial" vehicle such as a truck). The mapping platform 111 generates a recommended route 509 and presents a representation of the recommended route 509 in user interface element 511. In this example, the recommended route 509 includes two road attribute: a yield sign 513 and a traffic light 515. The mapping platform 111 then interacts with the machine learning system 105 to determine or otherwise provide learned speed profiles 107 for the road segments near the yield sign 513 and traffic light 515 corresponding to the speed of the commercial vehicle entering the respective analysis distances of the yield sign 513 and traffic light 515. The learned speed profiles 107 for the road segments of the route 509 that are associated with the road attributes are then concatenated with the historical traffic free flow speeds on the road segments not associated with a road attribute to generate an overall speed profile of the route 509 (e.g., the predicted vehicle speed at each road segment in the route 509). In the example of FIG. 5, a user selects a road segment 517 of the route 509 using a mouse pointer 519. The mapping platform 111 determines the predicted average speed for the selected road segment 517 from the overall speed profile of the route 509, and presents the predicted average speed for the road segment 517 in user interface element 521. The estimated travel time (not shown) for the route 509 can optionally be calculated based on the predicted average speeds for all road segments in the overall speed profile and the overall distanced covered by the recommended route 509. In addition, an estimated time of arrival (not shown) can be optionally calculated from the estimated travel time and the start time of the navigation route 509.

Returning to FIG. 1, as shown, the system 100 includes a machine learning system 105 for generating learned speed profiles 107 for a given road attribute. In one embodiment, the machine learning system 105 processes probe data 115 and road attribute sample data 121 to generate learned speed profiles 107 for road segments with road attributes. The machine learning system 105 includes or is otherwise associated with one or more machine learning models 113 (e.g., based on algorithms such as but not limited to KNN, K means, and/or equivalent) for performing machine supervised or unsupervised learning tasks according to the embodiments described herein.

In one embodiment, the machine learning system 105 has connectivity over the communication network 123 to the mapping platform 111, services platform 125 that provides one or more services 127 that can use learned speed profiles 107 for downstream functions. By way of example, the services 127 may be third party services and include but is not limited to mapping services, navigation services, travel planning services, notification services, social networking services, content (e.g., audio, video, images, etc.) provisioning services, application services, storage services, contextual information determination services, location-based services, information-based services (e.g., weather, news, etc.), etc. In one embodiment, the services 127 uses the output of the machine learning system 105 (e.g., learned speed profiles 107) to provide services such as navigation, mapping, other location-based services, etc. to the vehicles 101, UEs 103, applications 119, and/or other client devices.

In one embodiment, the machine learning system 105 and/or mapping platform 111 may be a platform with multiple interconnected components. The machine learning system 105 and/or mapping platform 111 may include multiple servers, intelligent networking devices, computing devices, components, and corresponding software for generating learned speed profiles 107 for a given road attribute according to the various embodiments described herein. In addition, it is noted that the machine learning system 105 may be a separate entity of the system 100, a part of the mapping platform 111, one or more services 127, a part of the services platform 125, or included within components of the vehicles 101 and/or UEs 103.

In one embodiment, content providers 129 may provide content or data (e.g., including network feature data, graph data, geographic data, etc.) to the geographic database 109, machine learning system 105, the mapping platform 111, the services platform 125, the services 127, the vehicles 101, the UEs 103, and/or the applications 119 executing on the UEs 103. The content provided may be any type of content, such as probe data, machine learning models, permutations matrices, map embeddings, map content, textual content, audio content, video content, image content, etc. In one embodiment, the content providers 129 may provide content that may aid in generating learned speed profiles 107 for a given road attribute according to the various embodiments described herein. In one embodiment, the content providers 129 may also store content associated with the machine learning system 105, geographic database 109, mapping platform 111, services platform 125, services 127, and/or any other component of the system 100. In another embodiment, the content providers 129 may manage access to a central repository of data, and offer a consistent, standard interface to data, such as a repository of the geographic database 109.

In one embodiment, the vehicles 101 and/or UEs 103 may execute software applications 119 to used learned speed profiles 107 according to the embodiments described herein. By way of example, the applications 119 may also be any type of application that is executable on the vehicles 101 and/or UEs 103, such as autonomous driving applications, routing applications, mapping applications, location-based service applications, navigation applications, device control applications, content provisioning services, camera/imaging application, media player applications, social networking applications, calendar applications, and the like. In one embodiment, the applications 119 may act as a client for the machine learning system 105 and/or mapping platform 111 and perform one or more functions associated with compressing data for machine learning or equivalent tasks alone or in combination with the machine learning system 105 and/or mapping platform 111.

By way of example, the vehicles 101 and/or UEs 103 is or can include any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the vehicles 101 and/or UEs 103 can support any type of interface to the user (such as "wearable" circuitry, etc.). In one embodiment, the vehicles 101 and/or UEs 103 may be associated with or be a component of a vehicle or any other device.

In one embodiment, the vehicles 101 and/or UEs 103 are configured with various sensors for generating or collecting probe data 115, related geographic data, etc. In one embodiment, the sensed data represent sensor data associated with a geographic location or coordinates at which the sensor data was collected, and the polyline or polygonal representations of detected objects of interest derived therefrom to generate the digital map data of the geographic database 109. By way of example, the sensors may include a global positioning sensor for gathering location data (e.g., GPS), IMUs, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture road sign information, images of road obstructions, etc. for analysis), an audio recorder for gathering audio data, velocity sensors mounted on steering wheels of the vehicles, switch sensors for determining whether one or more vehicle switches are engaged, and the like.

Other examples of sensors of the vehicles 101 and/or UEs 103 may include light sensors, orientation sensors augmented with height sensors and acceleration sensor, tilt sensors to detect the degree of incline or decline (e.g., slope) along a path of travel, moisture sensors, pressure sensors, etc. In a further example embodiment, sensors about the perimeter of the vehicles 101 and/or UEs 103 may detect the relative distance of the device or vehicle from a lane or roadway, the presence of other vehicles, pedestrians, traffic lights, potholes and any other objects, or a combination thereof. In one scenario, the sensors may detect weather data, traffic information, or a combination thereof. In one embodiment, the vehicles 101 and/or UEs 103 may include GPS or other satellite-based receivers to obtain geographic coordinates from positioning satellites for determining current location and time. Further, the location can be determined by visual odometry, triangulation systems such as A-GPS, Cell of Origin, or other location extrapolation technologies.

In one embodiment, the communication network 123 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G New Radio networks, code division multiple access (CDMA), wideband code division multiple access (WCDMA), wireless fidelity (Wi-Fi), wireless LAN (WLAN), Bluetooth^{®}, Internet Protocol (IP) data casting, satellite, mobile ad-hoc network (MANET), and the like, or any combination thereof.

By way of example, the machine learning system 105, mapping platform 111, services platform 125, services 127, vehicles 101 and/or UEs 103, and/or content providers 129 communicate with each other and other components of the system 100 using well known, new or still developing protocols. In this context, a protocol includes a set of rules defining how the network nodes within the communication network 123 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

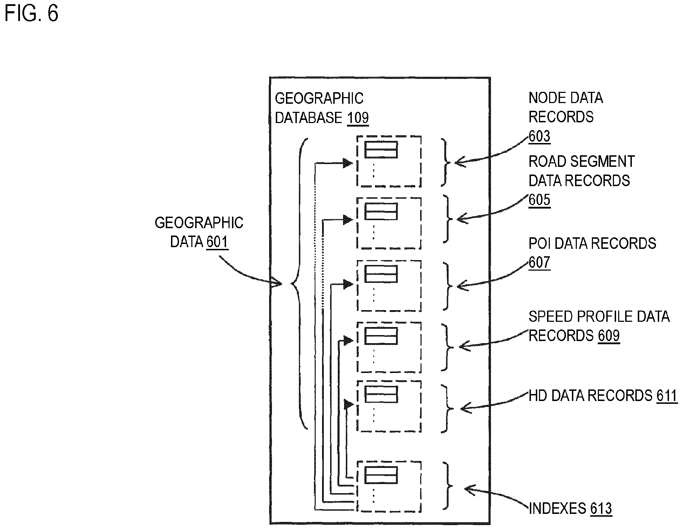

FIG. 6 is a diagram of a geographic database 109, according to one embodiment. In one embodiment, the geographic database 109 includes geographic data 601 used for (or configured to be compiled to be used for) mapping and/or navigation-related services, such as for providing map embedding analytics according to the embodiments described herein. For example, the map data records stored herein can be used to determine the semantic relationships among the map features, attributes, categories, etc. represented in the geographic data 601. In one embodiment, the geographic database 109 include high definition (HD) mapping data that provide centimeter-level or better accuracy of map features. For example, the geographic database 109 can be based on Light Detection and Ranging (LiDAR) or equivalent technology to collect billions of 3D points and model road surfaces and other map features down to the number lanes and their widths. In one embodiment, the HD mapping data (e.g., HD data records 611) and/or other mapping data of the geographic database 109 capture and store details such as but not limited to road attributes and/or other features related to generating speed profile data. These details include but are not limited to road width, number of lanes, turn maneuver representations/guides, traffic lights, light timing/stats information, slope and curvature of the road, lane markings, roadside objects such as signposts, including what the signage denotes. By way of example, the HD mapping data enable highly automated vehicles to precisely localize themselves on the road.

In one embodiment, geographic features (e.g., two-dimensional or three-dimensional features) are represented using polylines and/or polygons (e.g., two-dimensional features) or polygon extrusions (e.g., three-dimensional features). In one embodiment, these polylines/polygons can also represent ground truth or reference features or objects (e.g., signs, road markings, lane lines, landmarks, etc.) used for visual odometry. For example, the polylines or polygons can correspond to the boundaries or edges of the respective geographic features. In the case of a building, a two-dimensional polygon can be used to represent a footprint of the building, and a three-dimensional polygon extrusion can be used to represent the three-dimensional surfaces of the building. Accordingly, the terms polygons and polygon extrusions as used herein can be used interchangeably.

In one embodiment, the following terminology applies to the representation of geographic features in the geographic database 109.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 109 follows certain conventions. For example, links do not cross themselves and do not cross each other except at a node. Also, there are no duplicated shape points, nodes, or links. Two links that connect each other have a common node. In the geographic database 109, overlapping geographic features are represented by overlapping polygons. When polygons overlap, the boundary of one polygon crosses the boundary of the other polygon. In the geographic database 109, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 109 includes node data records 603, road segment or link data records 605, POI data records 607, speed profile data records 609, HD mapping data records 611, and indexes 613, for example. More, fewer, or different data records can be provided. In one embodiment, additional data records (not shown) can include cartographic ("carto") data records, routing data, and maneuver data. In one embodiment, the indexes 613 may improve the speed of data retrieval operations in the geographic database 109. In one embodiment, the indexes 613 may be used to quickly locate data without having to search every row in the geographic database 109 every time it is accessed. For example, in one embodiment, the indexes 613 can be a spatial index of the polygon points associated with stored feature polygons. In one or more embodiments, data of a data record may be attributes of another data record.

In exemplary embodiments, the road segment data records 605 are links or segments representing roads, streets, or paths, as can be used in the calculated route or recorded route information for determination of speed profile data. The node data records 603 are end points (for example, representing intersections or an end of a road) corresponding to the respective links or segments of the road segment data records 605. The road link data records 605 and the node data records 603 represent a road network, such as used by vehicles, cars, and/or other entities. Alternatively, the geographic database 109 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 109 can include data about the POIs and their respective locations in the POI data records 607. The geographic database 109 can also include data about road attributes (e.g., traffic lights, stop signs, yield signs, roundabouts, lane count, road width, lane width, etc.), places, such as cities, towns, or other communities, and other geographic features, such as bodies of water, mountain ranges, etc. Such place or feature data can be part of the POI data records 607 or can be associated with POIs or POI data records 607 (such as a data point used for displaying or representing a position of a city).

In one embodiment, the geographic database 109 can also include speed profile data records 609 for learned speed profiles 107, road attribute sample data 121, probe data 115, annotated/labeled probe data 115, feature correlations (e.g., traffic flow, traffic volume, etc.), machine learning models 113, and/or any other related data that is used or generated according to the embodiments described herein. By way of example, the speed profile data records 609 can be associated with one or more of the node records 603, road segment records 605, and/or POI data records 607 to associate the speed profile data records 609 with specific places, POIs, geographic areas, and/or other map features. In this way, the linearized data records 609 can also be associated with the characteristics or metadata of the corresponding records 603, 605, and/or 607.

In one embodiment, as discussed above, the HD mapping data records 611 model road surfaces and other map features to centimeter-level or better accuracy. The HD mapping data records 611 also include ground truth object models that provide the precise object geometry with polylines or polygonal boundaries, as well as rich attributes of the models. These rich attributes include, but are not limited to, object type, object location, lane traversal information, lane types, lane marking types, lane level speed limit information, and/or the like. In one embodiment, the HD mapping data records 611 are divided into spatial partitions of varying sizes to provide HD mapping data to end user devices with near real-time speed without overloading the available resources of the devices (e.g., computational, memory, bandwidth, etc. resources).

In one embodiment, the HD mapping data records 611 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 611.

In one embodiment, the HD mapping data records 611 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time data (e.g., including probe trajectories) also at centimeter-level accuracy. Other sensor data can include vehicle telemetry or operational data such as windshield wiper activation state, braking state, steering angle, accelerator position, and/or the like.

In one embodiment, the geographic database 109 can be maintained by the content provider 129 in association with the services platform 125 (e.g., a map developer). The map developer can collect geographic data to generate and enhance the geographic database 109. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 109 can be a master geographic database stored in a format that facilitates updating, maintenance, and development. For example, the master geographic database or data in the master geographic database can be in an Oracle spatial format or other format (e.g., capable of accommodating multiple/different map layers), such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by vehicles 101 and/or UEs 103. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for generating learned speed profile data 107 given a road attribute may be advantageously implemented via software, hardware (e.g., general processor, Digital Signal Processing (DSP) chip, an Application Specific Integrated Circuit (ASIC), Field Programmable Gate Arrays (FPGAs), Graphics Processing Unit (GPU), etc.), firmware or a combination thereof. Such exemplary hardware for performing the described functions is detailed below.

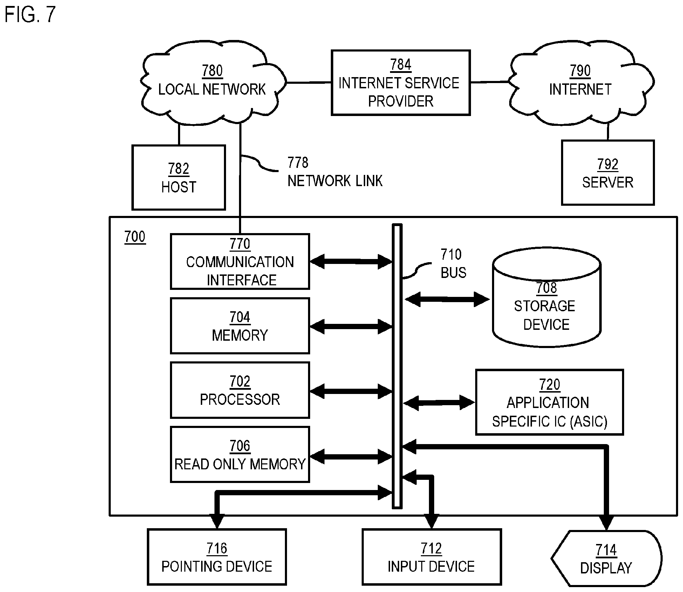

FIG. 7 illustrates a computer system 700 upon which an embodiment of the invention may be implemented. Computer system 700 is programmed (e.g., via computer program code or instructions) to generate learned speed profile data 107 given a road attribute as described herein and includes a communication mechanism such as a bus 710 for passing information between other internal and external components of the computer system 700. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 710 includes one or more parallel conductors of information so that information is transferred quickly among devices coupled to the bus 710. One or more processors 702 for processing information are coupled with the bus 710.

A processor 702 performs a set of operations on information as specified by computer program code related to generate learned speed profile data 107 given a road attribute. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 710 and placing information on the bus 710. The set of operations also typically include comparing two or more units of information, shifting positions of units of information, and combining two or more units of information, such as by addition or multiplication or logical operations like OR, exclusive OR (XOR), and AND. Each operation of the set of operations that can be performed by the processor is represented to the processor by information called instructions, such as an operation code of one or more digits. A sequence of operations to be executed by the processor 702, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 700 also includes a memory 704 coupled to bus 710. The memory 704, such as a random access memory (RAM) or other dynamic storage device, stores information including processor instructions for generating learned speed profile data 107 given a road attribute. Dynamic memory allows information stored therein to be changed by the computer system 700. RAM allows a unit of information stored at a location called a memory address to be stored and retrieved independently of information at neighboring addresses. The memory 704 is also used by the processor 702 to store temporary values during execution of processor instructions. The computer system 700 also includes a read only memory (ROM) 706 or other static storage device coupled to the bus 710 for storing static information, including instructions, that is not changed by the computer system 700. Some memory is composed of volatile storage that loses the information stored thereon when power is lost. Also coupled to bus 710 is a non-volatile (persistent) storage device 708, such as a magnetic disk, optical disk or flash card, for storing information, including instructions, that persists even when the computer system 700 is turned off or otherwise loses power.

Information, including instructions for generating learned speed profile data 107 given a road attribute, is provided to the bus 710 for use by the processor from an external input device 712, such as a keyboard containing alphanumeric keys operated by a human user, or a sensor. A sensor detects conditions in its vicinity and transforms those detections into physical expression compatible with the measurable phenomenon used to represent information in computer system 700. Other external devices coupled to bus 710, used primarily for interacting with humans, include a display device 714, such as a cathode ray tube (CRT) or a liquid crystal display (LCD), or plasma screen or printer for presenting text or images, and a pointing device 716, such as a mouse or a trackball or cursor direction keys, or motion sensor, for controlling a position of a small cursor image presented on the display 714 and issuing commands associated with graphical elements presented on the display 714. In some embodiments, for example, in embodiments in which the computer system 700 performs all functions automatically without human input, one or more of external input device 712, display device 714 and pointing device 716 is omitted.

In the illustrated embodiment, special purpose hardware, such as an application specific integrated circuit (ASIC) 720, is coupled to bus 710. The special purpose hardware is configured to perform operations not performed by processor 702 quickly enough for special purposes. Examples of application specific ICs include graphics accelerator cards for generating images for display 714, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 700 also includes one or more instances of a communications interface 770 coupled to bus 710. Communication interface 770 provides a one-way or two-way communication coupling to a variety of external devices that operate with their own processors, such as printers, scanners and external disks. In general the coupling is with a network link 778 that is connected to a local network 780 to which a variety of external devices with their own processors are connected. For example, communication interface 770 may be a parallel port or a serial port or a universal serial bus (USB) port on a personal computer. In some embodiments, communications interface 770 is an integrated services digital network (ISDN) card or a digital subscriber line (DSL) card or a telephone modem that provides an information communication connection to a corresponding type of telephone line. In some embodiments, a communication interface 770 is a cable modem that converts signals on bus 710 into signals for a communication connection over a coaxial cable or into optical signals for a communication connection over a fiber optic cable. As another example, communications interface 770 may be a local area network (LAN) card to provide a data communication connection to a compatible LAN, such as Ethernet. Wireless links may also be implemented. For wireless links, the communications interface 770 sends or receives or both sends and receives electrical, acoustic or electromagnetic signals, including infrared and optical signals, that carry information streams, such as digital data. For example, in wireless handheld devices, such as mobile telephones like cell phones, the communications interface 770 includes a radio band electromagnetic transmitter and receiver called a radio transceiver. In certain embodiments, the communications interface 770 enables connection to the communication network 123 for generating learned speed profile data 107 given a road attribute.

The term computer-readable medium is used herein to refer to any medium that participates in providing information to processor 702, including instructions for execution. Such a medium may take many forms, including, but not limited to, non-volatile media, volatile media and transmission media. Non-volatile media include, for example, optical or magnetic disks, such as storage device 708. Volatile media include, for example, dynamic memory 704. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 778 typically provides information communication using transmission media through one or more networks to other devices that use or process the information. For example, network link 778 may provide a connection through local network 780 to a host computer 782 or to equipment 784 operated by an Internet Service Provider (ISP). ISP equipment 784 in turn provides data communication services through the public, world-wide packet-switching communication network of networks now commonly referred to as the Internet 790.

A computer called a server host 792 connected to the Internet hosts a process that provides a service in response to information received over the Internet. For example, server host 792 hosts a process that provides information representing video data for presentation at display 714. It is contemplated that the components of system can be deployed in various configurations within other computer systems, e.g., host 782 and server 792.

FIG. 8 illustrates a chip set 800 upon which an embodiment of the invention may be implemented. Chip set 800 is programmed to generate learned speed profile data 107 given a road attribute as described herein and includes, for instance, the processor and memory components described with respect to FIG. 7 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 800 includes a communication mechanism such as a bus 801 for passing information among the components of the chip set 800. A processor 803 has connectivity to the bus 801 to execute instructions and process information stored in, for example, a memory 805. The processor 803 may include one or more processing cores with each core configured to perform independently. A multi-core processor enables multiprocessing within a single physical package. Examples of a multi-core processor include two, four, eight, or greater numbers of processing cores. Alternatively or in addition, the processor 803 may include one or more microprocessors configured in tandem via the bus 801 to enable independent execution of instructions, pipelining, and multithreading. The processor 803 may also be accompanied with one or more specialized components to perform certain processing functions and tasks such as one or more digital signal processors (DSP) 807, or one or more application-specific integrated circuits (ASIC) 809. A DSP 807 typically is configured to process real-world signals (e.g., sound) in real time independently of the processor 803. Similarly, an ASIC 809 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 803 and accompanying components have connectivity to the memory 805 via the bus 801. The memory 805 includes both dynamic memory (e.g., RAM, magnetic disk, writable optical disk, etc.) and static memory (e.g., ROM, CD-ROM, etc.) for storing executable instructions that when executed perform the inventive steps described herein to generate learned speed profile data 107 given a road attribute. The memory 805 also stores the data associated with or generated by the execution of the inventive steps.

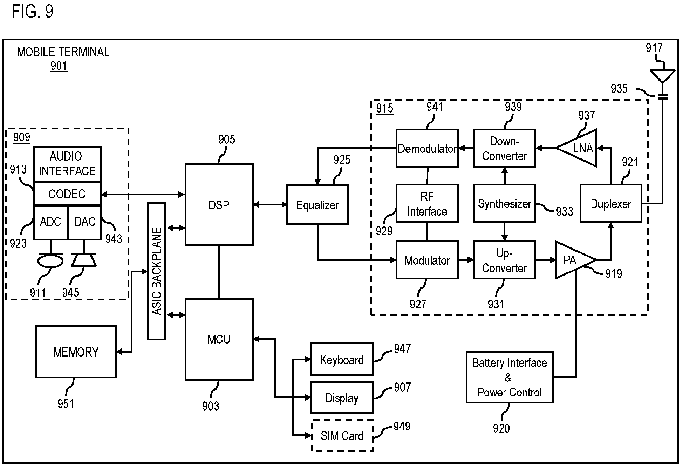

FIG. 9 is a diagram of exemplary components of a mobile terminal (e.g., vehicle 101, UE 103, or component thereof) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 903, a Digital Signal Processor (DSP) 905, and a receiver/transmitter unit including a microphone gain control unit and a speaker gain control unit. A main display unit 907 provides a display to the user in support of various applications and mobile station functions that offer automatic contact matching. An audio function circuitry 909 includes a microphone 911 and microphone amplifier that amplifies the speech signal output from the microphone 911. The amplified speech signal output from the microphone 911 is fed to a coder/decoder (CODEC) 913.

A radio section 915 amplifies power and converts frequency in order to communicate with a base station, which is included in a mobile communication system, via antenna 917. The power amplifier (PA) 919 and the transmitter/modulation circuitry are operationally responsive to the MCU 903, with an output from the PA 919 coupled to the duplexer 921 or circulator or antenna switch, as known in the art. The PA 919 also couples to a battery interface and power control unit 920.

In use, a user of mobile station 901 speaks into the microphone 911 and his or her voice along with any detected background noise is converted into an analog voltage. The analog voltage is then converted into a digital signal through the Analog to Digital Converter (ADC) 923. The control unit 903 routes the digital signal into the DSP 905 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, 5G New Radio networks, code division multiple access (CDMA), wireless fidelity (WiFi), satellite, and the like.

The encoded signals are then routed to an equalizer 925 for compensation of any frequency-dependent impairments that occur during transmission though the air such as phase and amplitude distortion. After equalizing the bit stream, the modulator 927 combines the signal with a RF signal generated in the RF interface 929. The modulator 927 generates a sine wave by way of frequency or phase modulation. In order to prepare the signal for transmission, an up-converter 931 combines the sine wave output from the modulator 927 with another sine wave generated by a synthesizer 933 to achieve the desired frequency of transmission. The signal is then sent through a PA 919 to increase the signal to an appropriate power level. In practical systems, the PA 919 acts as a variable gain amplifier whose gain is controlled by the DSP 905 from information received from a network base station. The signal is then filtered within the duplexer 921 and optionally sent to an antenna coupler 935 to match impedances to provide maximum power transfer. Finally, the signal is transmitted via antenna 917 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 901 are received via antenna 917 and immediately amplified by a low noise amplifier (LNA) 937. A down-converter 939 lowers the carrier frequency while the demodulator 941 strips away the RF leaving only a digital bit stream. The signal then goes through the equalizer 925 and is processed by the DSP 905. A Digital to Analog Converter (DAC) 943 converts the signal and the resulting output is transmitted to the user through the speaker 945, all under control of a Main Control Unit (MCU) 903-which can be implemented as a Central Processing Unit (CPU) (not shown).

The MCU 903 receives various signals including input signals from the keyboard 947. The keyboard 947 and/or the MCU 903 in combination with other user input components (e.g., the microphone 911) comprise a user interface circuitry for managing user input. The MCU 903 runs a user interface software to facilitate user control of at least some functions of the mobile station 901 to generate learned speed profile data 107 given a road attribute. The MCU 903 also delivers a display command and a switch command to the display 907 and to the speech output switching controller, respectively. Further, the MCU 903 exchanges information with the DSP 905 and can access an optionally incorporated SIM card 949 and a memory 951. In addition, the MCU 903 executes various control functions required of the station. The DSP 905 may, depending upon the implementation, perform any of a variety of conventional digital processing functions on the voice signals. Additionally, DSP 905 determines the background noise level of the local environment from the signals detected by microphone 911 and sets the gain of microphone 911 to a level selected to compensate for the natural tendency of the user of the mobile station 901.

The CODEC 913 includes the ADC 923 and DAC 943. The memory 951 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 951 may be, but not limited to, a single memory, CD, DVD, ROM, RAM, EEPROM, optical storage, or any other non-volatile or non-transitory storage medium capable of storing digital data.

An optionally incorporated SIM card 949 carries, for instance, important information, such as the cellular phone number, the carrier supplying service, subscription details, and security information. The SIM card 949 serves primarily to identify the mobile station 901 on a radio network. The card 949 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the appended claims.

## Claims

1. A computer-implemented method (400) comprising:
determining (401) a location of a road attribute in a road network;
retrieving probe data collected using one or more location sensors of one or more vehicles in the road network;
determining (403) an analysis distance before and after the location of the road attribute in the road network, the analysis distance being greater than a stopping distance of the one or more vehicles, the stopping distance of the one or more vehicles being affected by the type and/or characteristics of the one or more vehicles, wherein:
the type and/or characteristics are determined from annotations in the retrieved probe data (115); or
the retrieved probe data (115) is processed and grouped by different observed driving behavior profiles or features that are used to classify the associated one or more vehicles by different type and/or characteristics;
sampling (405) the probe data collected inside the analysis distance before and after the location of the road attribute in the road network;
processing (407) the sampled probe data using a machine learning model to determine one or more machine-learned speed profiles of one or more road segments of the road network within the analysis distance; and
providing (409) the one or more machine-learned speed profiles as an output.

2. The method (400) of claim 1, further comprising:
receiving a request specifying a navigation route; and
determining a route speed profile for the navigation route based, at least in part, on the one or more machine-learned speed profiles associated with the road attribute based on identifying the road attribute in one or more road segments of the navigation route.

3. The method (400) of claim 2, wherein the navigation route includes the road attribute and one or more other road attribute types, and wherein the route speed profile is further based on one or more other machine-learned speed profiles associated with the one or more other road attribute types.

4. The method (400) of claim 1, wherein the machine learning model further processes the probe data to determine a stopping time period associated with the road attribute based on a time that the one or more vehicles is traveling below a threshold speed value.

5. The method (400) of claim 1, wherein the machine learning model further processes the probe data to determine a probability of stopping associated with the road attribute based on a percentage of on one or more instances of the one or more vehicles traveling below a threshold speed value for more than a threshold period of time.

6. The method (400) of claim 1, wherein the analysis distance is determined based on a speed limit, a traffic flow speed, or a combination thereof with proximity of the location of the road attribute.

7. The method (400) of claim 1, wherein the road attribute is a traffic light, the method further comprising:
annotating one or more points of the probe data based on one or more traffic light states,
wherein the machine learning model is trained using the one or more annotated points to classify the one or more machine-learned speed profiles with respect to the one or more traffic light states.

8. The method (400) of claim 7, wherein the one or more traffic light states include:
one or more decelerating states comprising a red-light state, a green-light-to-red-light state, or a combination thereof; and
one or more accelerating states comprising a green-light state, a red-light-to-green-light state, or a combination thereof.

9. The method (400) of claim 1, further comprising:
filtering the probe data according to at least one filtering category,
wherein the one or more machine-learned speed profiles are determined based on the at least one filtering category.

10. The method (400) of claim 9, wherein the at least one filtering category includes at least one of a time of day, a day of week, a season, before Covid, low sampling frequency probes, or a combination thereof.

11. The method (400) of claim 9, wherein the at least one filtering category includes a vehicle type, a vehicle characteristic, or a combination thereof.

12. The method (400) of claim 1, wherein the machine learning model is a supervised K-nearest neighbors (KNN) algorithm to determine the one or more machine-learned speed profiles.

13. The method (400) of claim 1, wherein the machine learning model is an unsupervised model that uses K-means clustering to determine the one or more machine-learned speed profiles.

14. An apparatus (105, 700) comprising:
at least one processor (702); and
at least one memory (704, 706) including computer program code for one or more programs,
the at least one memory (704, 706) and the computer program code configured to, with the at least one processor (702), cause the apparatus (700) to perform at least the following,
determine (401) a location of a road attribute in a road network;
retrieve probe data collected using one or more location sensors of one or more vehicles in the road network;
determine (403) an analysis distance before and after the location of the road attribute in the road network, the analysis distance being greater than a stopping distance of the one or more vehicles, the stopping distance of the one or more vehicles being affected by the type and/or characteristics of the one or more vehicles, wherein:
the type and/or characteristics are determined from annotations in the retrieved probe data (115); or
the retrieved probe data (115) is processed and grouped by different observed driving behavior profiles or features that are used to classify the associated one or more vehicles by different type and/or characteristics;
sample (405) the probe data collected inside the analysis distance before and after the location of the road attribute in the road network;
process (407) the sampled probe data using a machine learning model to determine one or more machine-learned speed profiles of one or more road segments of the road network within the analysis distance; and
provide (409) the one or more machine-learned speed profiles as an output.

15. A computer program comprising one or more sequences of one or more instructions which, when executed by one or more processors (702), cause an apparatus (105, 700) to perform:
determining (401) a location of a road attribute in a road network;
retrieving probe data collected using one or more location sensors of one or more vehicles in the road network;
determining (403) an analysis distance before and after the location of the road attribute in the road network, the analysis distance being greater than a stopping distance of the one or more vehicles, the stopping distance of the one or more vehicles being affected by the type and/or characteristics of the one or more vehicles, wherein:
the type and/or characteristics are determined from annotations in the retrieved probe data (115); or
the retrieved probe data (115) is processed and grouped by different observed driving behavior profiles or features that are used to classify the associated one or more vehicles by different type and/or characteristics;
sampling (405) the probe data collected within the analysis distance before and after the location of the road attribute in the road network;
processing (407) the sampled probe data using a machine learning model to determine one or more machine-learned speed profiles of one or more road segments of the road network within the analysis distance; and
providing (409) the one or more machine-learned speed profiles as an output.

## Patentansprüche

1. Computerimplementiertes Verfahren (400), umfassend:
Bestimmen (401) eines Ortes für ein Straßenattribut in einem Straßennetzwerk;
Abrufen von Sondendaten, die mit einem oder mehreren Ortungssensoren eines oder mehrerer Fahrzeuge im Straßennetzwerk gesammelt wurden;
Bestimmen (403) eines Analyseabstands vor und nach dem Ort des Straßenattributs im Straßennetzwerk, wobei der Analyseabstand größer ist als ein Anhalteweg des einen oder der mehreren Fahrzeuge, wobei der Anhalteweg des einen oder der mehreren Fahrzeuge durch den Typ und/oder die Eigenschaften des einen oder der mehreren Fahrzeuge beeinflusst wird, wobei
der Typ und/oder die Eigenschaften anhand von Anmerkungen in den abgerufenen Sondendaten bestimmt werden (115); oder
die abgerufenen Sondendaten (115) verarbeitet und nach verschiedenen beobachteten Fahrverhaltensprofilen oder Merkmalen gruppiert werden, die verwendet werden, um die zugehörigen ein oder mehreren Fahrzeuge nach verschiedenen Typen und/oder Eigenschaften zu klassifizieren;
Sammeln (405) der Sondendaten, die innerhalb der Analysedistanz vor und nach der Position des Straßenattributs im Straßennetzwerk gesammelt wurden;
Verarbeiten (407) der abgetasteten Sondendaten unter Verwendung eines maschinengelernten Modells, um ein oder mehrere maschinengelernte Geschwindigkeitsprofile von einem oder mehreren Straßennetzwerksegmenten innerhalb des Analyseabstands zu bestimmen; und
Bereitstellen (409) des einen oder mehrerer maschinengelernter Geschwindigkeitsprofile als Ausgabe.

2. Verfahren (400) nach Anspruch 1, ferner umfassend:
Empfangen einer Anfrage, die eine Navigationsroute angibt; und
Bestimmen eines Routengeschwindigkeitsprofils für die Navigationsroute mindestens teilweise basierend auf dem einen oder den mehreren maschinengelernten Geschwindigkeitsprofilen, die dem Straßenattribut zugeordnet sind, basierend auf der Identifizierung des Straßenattributs in einem oder mehreren Straßensegmenten der Navigationsroute.

3. Verfahren (400) nach Anspruch 2, wobei die Navigationsroute das Straßenattribut und einen oder mehrere andere Straßenattributtypen einschließt, und wobei das Routengeschwindigkeitsprofil ferner auf einem oder mehreren anderen maschinengelernten Geschwindigkeitsprofilen basiert, die mit dem einen oder den mehreren anderen Straßenattributtypen verbunden sind.

4. Verfahren (400) nach Anspruch 1, wobei das maschinengelernte Modell ferner die Sondendaten verarbeitet, um eine mit dem Straßenattribut verknüpfte Anhaltezeitspanne zu bestimmen, die auf einer Zeit basiert, in der das eine oder die mehreren Fahrzeuge unter einem Geschwindigkeitsschwellenwert unterwegs sind.

5. Verfahren (400) nach Anspruch 1, wobei das maschinengelernte Modell ferner die Sondendaten verarbeitet, um eine Wahrscheinlichkeit des Anhaltens zu bestimmen, die mit dem Straßenattribut assoziiert ist und auf einem Prozentsatz von einem oder mehreren Fällen des einen oder der mehreren Fahrzeuge basiert, die unter einem Schwellengeschwindigkeitswert für mehr als eine Schwellenzeitspanne fahren.

6. Verfahren (400) nach Anspruch 1, wobei der Analyseabstand basierend auf einer Geschwindigkeitsgrenze, einer Verkehrsflussgeschwindigkeit oder einer Kombination davon in der Nähe des Orts des Straßenattributs bestimmt wird.

7. Verfahren (400) nach Anspruch 1, wobei das Straßenattribut eine Verkehrsampel ist und das Verfahren ferner umfassend:
Annotieren eines oder mehrerer Punkte der Sondendaten basierend auf einem oder mehreren Verkehrsampelzuständen, wobei das maschinelle Lernmodell unter Verwendung des einen oder der mehreren annotierten Punkte trainiert wird, um das eine oder die mehreren maschinengelernten Geschwindigkeitsprofile in Bezug auf den einen oder die mehreren Verkehrsampelzustände zu klassifizieren.

8. Verfahren (400) nach Anspruch 7, wobei die ein oder mehreren Verkehrsampelzustände Folgendes einschließen:
einen oder mehrere Verlangsamungszustände, umfassend einen Rotlichtzustand, einen Grünlicht-zu-RotlichtZustand oder eine Kombination davon; und
einen oder mehrere Beschleunigungszustände, umfassend einen Grünlichtzustand, einen Rotlicht-zu-GrünlichtZustand oder eine Kombination davon.

9. Verfahren (400) nach Anspruch 1, ferner umfassend:
Filtern der Sondendaten nach mindestens einer Filterkategorie,
wobei das eine oder die mehreren maschinengelernten Geschwindigkeitsprofile basierend auf der mindestens einen Filterkategorie bestimmt werden.

10. Verfahren (400) nach Anspruch 9, wobei die mindestens eine Filterkategorie mindestens eine Tageszeit, einen Wochentag, eine Jahreszeit, vor Covid, Sonden mit niedriger Abtastfrequenz oder eine Kombination davon einschließt.

11. Verfahren (400) nach Anspruch 9, wobei die mindestens eine Filterkategorie einen Fahrzeugtyp, eine Fahrzeugeigenschaft oder eine Kombination davon einschließt.

12. Verfahren (400) nach Anspruch 1, wobei das maschinelle Lernmodell ein überwachter Algorithmus mit K nächsten Nachbarn (KNN) ist, um die ein oder mehreren maschinengelernten Geschwindigkeitsprofile zu bestimmen.

13. Verfahren (400) nach Anspruch 1, wobei das maschinelle Lernmodell ein nicht überwachtes Modell ist, das K-Mittel-Clustering verwendet, um das eine oder mehrere maschinengelernte Geschwindigkeitsprofile zu bestimmen.

14. Vorrichtung (105, 700), umfassend:
mindestens einen Prozessor (702); und
mindestens einen Speicher (704, 706), der einen Computerprogrammcode für ein oder mehrere Programme einschließt, wobei der mindestens eine Speicher (704, 706) und der Computerprogrammcode konfiguriert sind, um mit dem mindestens einen Prozessor (702) die Vorrichtung (700) zu veranlassen, mindestens das Folgende durchzuführen,
Bestimmen (401) eines Ortes für ein Straßenattribut in einem Straßennetzwerk;
Abrufen von Sondendaten, die mit einem oder mehreren Ortungssensoren eines oder mehrerer Fahrzeuge im Straßennetzwerk gesammelt wurden;
Bestimmen (403) eines Analyseabstands vor und nach dem Ort des Straßenattributs im Straßennetzwerk, wobei der Analyseabstand größer ist als ein Anhalteweg des einen oder der mehreren Fahrzeuge, wobei der Anhalteweg des einen oder der mehreren Fahrzeuge durch den Typ und/oder die Eigenschaften des einen oder der mehreren Fahrzeuge beeinflusst wird, wobei
der Typ und/oder die Eigenschaften anhand von Anmerkungen in den abgerufenen Sondendaten bestimmt werden (115); oder
die abgerufenen Sondendaten (115) verarbeitet und nach verschiedenen beobachteten Fahrverhaltensprofilen oder Merkmalen gruppiert werden, die verwendet werden, um die zugehörigen ein oder mehreren Fahrzeuge nach verschiedenen Typen und/oder Eigenschaften zu klassifizieren;
Sammeln (405) der Sondendaten, die innerhalb der Analysedistanz vor und nach der Position des Straßenattributs im Straßennetzwerk gesammelt wurden;
Verarbeiten (407) der abgetasteten Sondendaten unter Verwendung eines maschinengelernten Modells, um ein oder mehrere maschinengelernte Geschwindigkeitsprofile von einem oder mehreren Straßennetzwerksegmenten innerhalb des Analyseabstands zu bestimmen; und
Bereitstellen (409) des einen oder mehrerer maschinengelernter Geschwindigkeitsprofile als Ausgabe.

15. Computerprogramm, umfassend eine oder mehrere Sequenzen von einem oder mehreren Befehlen, die, wenn sie von einem oder mehreren Prozessoren (702) ausgeführt werden, eine Vorrichtung (105, 700) zur Durchführung von Folgendem veranlassen:
Bestimmen (401) eines Ortes für ein Straßenattribut in einem Straßennetzwerk;
Abrufen von Sondendaten, die mit einem oder mehreren Ortungssensoren eines oder mehrerer Fahrzeuge im Straßennetzwerk gesammelt wurden;
Bestimmen (403) eines Analyseabstands vor und nach dem Ort des Straßenattributs im Straßennetzwerk, wobei der Analyseabstand größer ist als ein Anhalteweg des einen oder der mehreren Fahrzeuge, wobei der Anhalteweg des einen oder der mehreren Fahrzeuge durch den Typ und/oder die Eigenschaften des einen oder der mehreren Fahrzeuge beeinflusst wird, wobei
der Typ und/oder die Eigenschaften anhand von Anmerkungen in den abgerufenen Sondendaten bestimmt werden (115); oder
die abgerufenen Sondendaten (115) verarbeitet und nach verschiedenen beobachteten Fahrverhaltensprofilen oder Merkmalen gruppiert werden, die verwendet werden, um die zugehörigen ein oder mehreren Fahrzeuge nach verschiedenen Typen und/oder Eigenschaften zu klassifizieren;
Sammeln (405) der Sondendaten, die innerhalb der Analysedistanz vor und nach der Position des Straßenattributs im Straßennetzwerk gesammelt wurden;
Verarbeiten (407) der abgetasteten Sondendaten unter Verwendung eines maschinengelernten Modells, um ein oder mehrere maschinengelernte Geschwindigkeitsprofile von einem oder mehreren Straßennetzwerksegmenten innerhalb des Analyseabstands zu bestimmen; und
Bereitstellen (409) des einen oder mehrerer maschinengelernter Geschwindigkeitsprofile als Ausgabe.

## Revendications

1. Procédé implémenté par ordinateur (400) comprenant :
la détermination (401) d'un emplacement d'un attribut routier dans un réseau routier ;
la récupération des données de sonde collectées à l'aide d'un ou plusieurs capteurs d'emplacement d'un ou plusieurs véhicules dans le réseau routier ;
la détermination (403) d'une distance d'analyse avant et après l'emplacement de l'attribut routier dans le réseau routier, la distance d'analyse étant supérieure à une distance d'arrêt de l'un ou plusieurs véhicules, la distance d'arrêt de l'un ou de plusieurs véhicules étant affectée par le type et/ou les caractéristiques de l'un ou de plusieurs véhicules, dans lequel
le type et/ou les caractéristiques sont déterminés à partir d'annotations dans les données de sonde récupérées (115) ; ou
les données de sonde récupérées (115) sont traitées et regroupées en fonction de différents profils ou traits de comportement de conduite observés qui sont utilisés pour classer l'un ou plusieurs véhicules associés en fonction de différents types et/ou caractéristiques ;
l'échantillonnage (405) des données de sonde collectées à l'intérieur de la distance d'analyse avant et après l'emplacement de l'attribut routier dans le réseau routier ;
le traitement (407) des données de sonde échantillonnées à l'aide d'un modèle d'apprentissage automatique pour déterminer un ou plusieurs profils de vitesse appris automatiquement d'un ou plusieurs segments routiers du réseau routier à l'intérieur de la distance d'analyse ; et
la fourniture (409) de l'un ou plusieurs profils de vitesse appris automatiquement en tant que résultat.

2. Procédé (400) selon la revendication 1, comprenant en outre :
la réception d'une requête spécifiant un itinéraire de navigation ; et
la détermination d'un profil de vitesse d'itinéraire pour l'itinéraire de navigation basé, au moins en partie, sur l'un ou plusieurs profils de vitesse appris automatiquement associés à l'attribut routier sur la base de l'identification de l'attribut routier dans un ou plusieurs segments routiers de l'itinéraire de navigation.

3. Procédé (400) selon la revendication 2, dans lequel l'itinéraire de navigation comporte l'attribut routier et un ou plusieurs autres types d'attributs routiers, et dans lequel le profil de vitesse d'itinéraire est en outre basé sur un ou plusieurs autres profils de vitesse appris automatiquement associés à l'un ou plusieurs autres types d'attributs routiers.

4. Procédé (400) selon la revendication 1, dans lequel le modèle d'apprentissage automatique traite en outre les données de sonde pour déterminer une période de temps d'arrêt associée à l'attribut routier sur la base d'une durée pendant laquelle l'un ou plusieurs véhicules se déplacent en dessous d'une valeur de vitesse seuil.

5. Procédé (400) selon la revendication 1, dans lequel le modèle d'apprentissage automatique traite en outre les données de sonde pour déterminer une probabilité d'arrêt associée à l'attribut routier sur la base d'un pourcentage d'une ou de plusieurs instances de l'un ou plusieurs véhicules se déplaçant en dessous d'une valeur de vitesse seuil pendant plus d'une période de temps seuil.

6. Procédé (400) selon la revendication 1, dans lequel la distance d'analyse est déterminée sur la base d'une limite de vitesse, d'une vitesse de circulation, ou d'une combinaison de celles-ci avec la proximité de l'emplacement de l'attribut routier.

7. Procédé (400) selon la revendication 1, dans lequel l'attribut routier est un feu de circulation, le procédé comprenant en outre :
l'annotation d'un ou de plusieurs points des données de sonde sur la base d'un ou de plusieurs états de feu de circulation, dans lequel le modèle d'apprentissage automatique est entraîné à l'aide de l'un ou plusieurs points annotés pour classer l'un ou plusieurs profils de vitesse appris automatiquement en fonction de l'un ou de plusieurs états de feu de circulation.

8. Procédé (400) selon la revendication 7, dans lequel l'un ou plusieurs états de feu de circulation comportent :
un ou plusieurs états de décélération comprenant un état de feu rouge, un état de feu vert à feu rouge, ou une combinaison de ceux-ci ; et
un ou plusieurs états d'accélération comprenant un état de feu vert, un état de feu rouge à feu vert, ou une combinaison de ceux-ci.

9. Procédé (400) selon la revendication 1, comprenant en outre :
le filtrage des données de sonde en fonction d'au moins une catégorie de filtrage,
dans lequel l'un ou plusieurs profils de vitesse appris automatiquement sont déterminés sur la base de l'au moins une catégorie de filtrage.

10. Procédé (400) selon la revendication 9, dans lequel l'au moins une catégorie de filtrage comporte au moins une heure de la journée, un jour de la semaine, une saison, avant Covid, des sondes à faible fréquence d'échantillonnage, ou une combinaison de ceux-ci.

11. Procédé (400) selon la revendication 9, dans lequel l'au moins une catégorie de filtrage comporte un type de véhicule, une caractéristique de véhicule, ou une combinaison de ceux-ci.

12. Procédé (400) selon la revendication 1, dans lequel le modèle d'apprentissage automatique est un algorithme supervisé des K plus proches voisins (KNN) pour déterminer l'un ou plusieurs profils de vitesse appris automatiquement.

13. Procédé (400) selon la revendication 1, dans lequel le modèle d'apprentissage automatique est un modèle non supervisé qui utilise le partitionnement en k-moyennes pour déterminer l'un ou plusieurs profils de vitesse appris automatiquement.

14. Appareil (105, 700) comprenant :
au moins un processeur (702) ; et
au moins une mémoire (704, 706) comportant un code de programme informatique pour un ou plusieurs programmes, l'au moins une mémoire (704, 706) et le code de programme informatique configurés pour, avec l'au moins un processeur (702), amener l'appareil (700) à effectuer au moins ce qui suit,
déterminer (401) un emplacement d'un attribut routier dans un réseau routier ;
récupérer des données de sonde collectées à l'aide d'un ou plusieurs capteurs d'emplacement d'un ou plusieurs véhicules dans le réseau routier ;
déterminer (403) une distance d'analyse avant et après l'emplacement de l'attribut routier dans le réseau routier, la distance d'analyse étant supérieure à une distance d'arrêt de l'un ou plusieurs véhicules, la distance d'arrêt de l'un ou plusieurs véhicules étant affectée par le type et/ou les caractéristiques de l'un ou plusieurs véhicules, dans lequel
le type et/ou les caractéristiques sont déterminés à partir d'annotations dans les données de sonde récupérées (115) ; ou
les données de sonde récupérées (115) sont traitées et regroupées en fonction de différents profils ou traits de comportement de conduite observés qui sont utilisés pour classer l'un ou plusieurs véhicules associés en fonction de différents types et/ou caractéristiques ;
échantillonner (405) les données de sonde collectées à l'intérieur de la distance d'analyse avant et après l'emplacement de l'attribut routier dans le réseau routier ;
traiter (407) les données de sonde échantillonnées à l'aide d'un modèle d'apprentissage automatique pour déterminer un ou plusieurs profils de vitesse appris automatiquement d'un ou plusieurs segments routiers du réseau routier à l'intérieur de la distance d'analyse ; et
fournir (409) l'un ou plusieurs profils de vitesse appris automatiquement en tant que résultat.

15. Programme informatique comprenant une ou plusieurs séquences d'une ou plusieurs instructions qui, lorsqu'elles sont exécutées par un ou plusieurs processeurs (702), amènent un appareil (105, 700) à effectuer :
la détermination (401) d'un emplacement d'un attribut routier dans un réseau routier ;
la récupération des données de sonde collectées à l'aide d'un ou plusieurs capteurs d'emplacement d'un ou plusieurs véhicules dans le réseau routier ;
la détermination (403) d'une distance d'analyse avant et après l'emplacement de l'attribut routier dans le réseau routier, la distance d'analyse étant supérieure à une distance d'arrêt de l'un ou plusieurs véhicules, la distance d'arrêt de l'un ou de plusieurs véhicules étant affectée par le type et/ou les caractéristiques de l'un ou de plusieurs véhicules, dans lequel
le type et/ou les caractéristiques sont déterminés à partir d'annotations dans les données de sonde récupérées (115) ; ou
les données de sonde récupérées (115) sont traitées et regroupées en fonction de différents profils ou traits de comportement de conduite observés qui sont utilisés pour classer l'un ou plusieurs véhicules associés en fonction de différents types et/ou caractéristiques ;
l'échantillonnage (405) des données de sonde collectées à l'intérieur de la distance d'analyse avant et après l'emplacement de l'attribut routier dans le réseau routier ;
le traitement (407) des données de sonde échantillonnées à l'aide d'un modèle d'apprentissage automatique pour déterminer un ou plusieurs profils de vitesse appris automatiquement d'un ou plusieurs segments routiers du réseau routier à l'intérieur de la distance d'analyse ; et
la fourniture (409) de l'un ou plusieurs profils de vitesse appris automatiquement en tant que résultat.
